# EUROPÄISCHE PATENTANMELDUNG

(11) **EP 4 123 877 A1**
(43) Veröffentlichungstag der Anmeldung: **25.01.2023**
(21) Anmeldenummer: 22185525.7
(22) Anmeldetag: 18.07.2022
(51) Int. Cl.: H02K 1/02, H02K 1/276, H02K 21/16

(54) **ROTOR FÜR EINE ELEKTRISCHE MASCHINE, ELEKTRISCHE MASCHINE UND VERFAHREN ZUM BETREIBEN EINER ELEKTRISCHEN MASCHINE**

(30) Priorität: 21.07.2021 DE 102021118832
(71) Anmelder: KNORR-BREMSE Systeme für Nutzfahrzeuge GmbH, 80809 München (DE)
(72) Erfinder: MATHÄ, Noel, 70437 Stuttgart (DE); STANKOVIC, Dordo, 71679 Asperg (DE); BONTINCK, Zeger, 75417 Mühlacker (DE)

(57) **Zusammenfassung**

Es wird ein Rotor (220) für eine elektrische Maschine (200) vorgestellt, wobei die elektrische Maschine (200) einen Stator (210) und den relativ zu dem Stator (210) drehbaren Rotor (220) aufweist. Der Rotor (220) umfasst eine Mehrzahl von Permanentmagneten (222) und einen ersten Rotorabschnitt (224), der aus einem ersten Material mit einer ersten magnetischen Permeabilität ausgeformt ist. Der erste Rotorabschnitt (224) umfasst mindestens einen in betriebsbereitem Zustand der elektrischen Maschine (200) dem Stator (210) zugewandten Teilabschnitt des Rotors (220). Die Permanentmagnete (222) sind zumindest teilweise in dem ersten Rotorabschnitt (224) angeordnet. Der Rotor (220) umfasst auch einen zweiten Rotorabschnitt (226), der aus einem zweiten Material mit einer zweiten magnetischen Permeabilität ausgeformt ist, die geringer als die erste magnetische Permeabilität ist. Der zweite Rotorabschnitt (226) umfasst einen in betriebsbereitem Zustand der elektrischen Maschine (200) von dem Stator (210) abgewandten Teilabschnitt des Rotors (220).

## Beschreibung

Die vorliegende Erfindung bezieht sich auf einen Rotor für eine elektrische Maschine, auf eine elektrische Maschine und auf ein Verfahren zum Betreiben einer elektrischen Maschine.

Herkömmliche Entwürfe von Rotoren für als Innenläufer ausgeführten elektrischen Maschinen versuchen beispielsweise, einen inneren Teil der Rotorlamellen in Sättigung zu betreiben. Deshalb können insbesondere kleine Eisenbrücken im Inneren eines solchen herkömmlichen Rotors eingebaut sein. Diese Brücken können beispielsweise so dünn sein, dass die Blechlamellen gesättigt werden, d. h. die magnetische Permeabilität dieser Regionen kann sich dem Wert von Luft annähern. Andere herkömmliche Entwürfe können die Brücken beispielsweise lediglich in Regionen mit der gleichen Polarisierung vorsehen. Um jedoch eine strukturelle Stabilität sicherzustellen, kann es hierbei besondere nötig sein, kleine Eisenbereiche über den Magneten einzubauen.

Vor diesem Hintergrund ist es die Aufgabe der vorliegenden Erfindung, einen verbesserten Rotor für eine elektrische Maschine, eine verbesserte elektrische Maschine und ein verbessertes Verfahren zum Betreiben einer elektrischen Maschine zu schaffen.

Diese Aufgabe wird durch einen Rotor für eine elektrische Maschine, durch eine elektrische Maschine und durch ein Verfahren zum Betreiben einer elektrischen Maschine gemäß den Hauptansprüchen gelöst.

Gemäß Ausführungsformen kann insbesondere eine innere Flussbarriere in Rotoren für Elektromotoren mit Permanentmagneten bereitgestellt werden, wobei eine Konzentration des magnetischen Flusses ausgenutzt werden kann. Hierbei können beispielsweise radial innere Bereiche des Rotors aus einem Material mit niedriger magnetischer Permeabilität ausgeformt sein. Beispielsweise können jedoch Stahllamellen als Material in den Bereichen zwischen und über den Magneten verwendet werden. Die Permanentmagnete können dabei zumindest teilweise in Stahlblechlamellen eingebettet sein.

Vorteilhafterweise kann gemäß Ausführungsformen insbesondere bei Elektromotoren mit Permanentmagneten durch einen hier vorgestellten Rotoraufbau eine Konzentration des magnetischen Flusses zu dem Luftspalt hin bewirkt werden, um eine effiziente Nutzung der Magnete zu erzielen. Es kann somit verhindert werden, dass sich an dem vom Stator abgewandten Teil der Magnete, d. h. nahe einer Rotorwelle im Falle eines Innenläufers, Feldlinien unterschiedlicher Pole verbinden. Insbesondere kann eine magnetische Permeabilität in diesem Rotorabschnitt beispielsweise verglichen mit Eisen an jene von Luft in dem Luftspalt angenähert werden. Somit kann insbesondere auch erreicht werden, dass ein maximaler Anteil des magnetischen Flusses den Rotor verlassen und damit zur Drehmomenterzeugung beitragen kann. Somit kann ein Magnetvolumen maximal für eine Drehmomenterzeugung ausgenutzt werden.

Anders ausgedrückt kann nahezu der gesamte magnetische Fluss, der durch den Magneten erzeugt wird, in den Luftspalt und in die Statorlamellen gezwungen werden. Der Vorteil besteht darin, dass mit der gleichen Menge an Magnetmaterial ein höheres Drehmoment des Motors erreicht werden kann oder für einen Motor, der ein gegebenes Drehmoment bereitstellen sollte, ein geringeres Volumen an Permanentmagnetmaterial benötigt wird und somit ein kostengünstigerer Entwurf des Motors bzw. der elektrischen Maschine erreicht werden kann. Es kann also der magnetische Fluss zu dem Luftspalt der elektrischen Maschine und dem Stator hin gezwungen werden. Dies kann zu einer verbesserten Wechselwirkung zwischen dem Rotor und dem Stator und damit zu einem verbesserten Drehmoment führen.

Ein Rotor für eine elektrische Maschine, wobei die elektrische Maschine einen Stator und den relativ zu dem Stator drehbaren Rotor aufweist, weist folgende Merkmale auf:
eine Mehrzahl von Permanentmagneten;
einen ersten Rotorabschnitt, der aus einem ersten Material mit einer ersten magnetischen Permeabilität ausgeformt ist, wobei der erste Rotorabschnitt mindestens einen in betriebsbereitem Zustand der elektrischen Maschine dem Stator zugewandten Teilabschnitt des Rotors aufweist, wobei die Permanentmagnete zumindest teilweise in dem ersten Rotorabschnitt angeordnet sind; und
einen zweiten Rotorabschnitt, der aus einem zweiten Material mit einer zweiten magnetischen Permeabilität ausgeformt ist, die geringer als die erste magnetische Permeabilität ist, wobei der zweite Rotorabschnitt einen in betriebsbereitem Zustand der elektrischen Maschine von dem Stator abgewandten Teilabschnitt des Rotors aufweist.

Die elektrische Maschine kann als ein Elektromotor bezeichnet werden. Der Stator kann zumindest eine elektrische Spule zur Wechselwirkung mit den Permanentmagneten aufweisen. Zwischen dem Rotor und dem Stator kann ein Luftspalt angeordnet sein.

Gemäß einer Ausführungsform kann der zweite Rotorabschnitt aus einem diamagnetischen und/oder paramagnetischen Material, insbesondere aus Aluminium ausgeformt sein. Eine solche Ausführungsform bietet den Vorteil, dass der magnetische Fluss besonders effektiv hin zu dem Luftspalt und dem Stator gelenkt werden kann. Ferner kann unter Verwendung von diamagnetischen und/oder paramagnetischen Materialien, wie Aluminium, mit einer niedrigeren Massedichte als Eisen in dem zweiten Rotorabschnitt des Rotors eine Trägheit des Rotors verringert werden. Dies kann auch eine Anlaufgeschwindigkeit des Motors verringern.

Auch kann der erste Rotorabschnitt aus Stahl und zusätzlich oder alternativ Eisen ausgeformt. Insbesondere kann der erste Rotorabschnitt Stahlblechlamellen, ein Blechpaket und zusätzlich oder alternativ Eisenbrücken aufweisen. Eine solche Ausführungsform bietet den Vorteil, dass der magnetische Fluss in dem ersten Rotorabschnitt zu dem Luftspalt und dem Stator hin konzentriert werden kann.

Ferner kann sich der erste Rotorabschnitt zwischen die Permanentmagnete erstrecken. Somit können die Permanentmagnete zumindest teilweise in dem ersten Rotorabschnitt eingebettet sein. Eine solche Ausführungsform bietet den Vorteil, dass eine magnetische Sättigung im Betrieb der elektrischen Maschine erreicht werden kann.

Insbesondere können die Permanentmagnete in einer Speichenkonfiguration angeordnet sein. Hierbei können Längserstreckungsachsen der Permanentmagnete bezogen auf den Rotor radial ausgerichtet sein. Eine solche Ausführungsform bietet den Vorteil, dass eine dichte Anordnung der Magnete und somit eine hohe Polpaarzahl erreicht werden kann, um ein hohes Nenndrehmoment erreichen zu können.

Gemäß einer Ausführungsform kann der Rotor ausgebildet sein, um von dem Stator zumindest teilweise umgeben drehbar zu sein. Dabei kann der erste Rotorabschnitt einen radial außenliegenden Teilabschnitt des Rotors aufweisen. Der zweite Rotorabschnitt kann einen radial innenliegenden Teilabschnitt des Rotors aufweisen. Die elektrische Maschine kann hierbei als ein Innenläufer ausgeführt sein. Eine solche Ausführungsform bietet den Vorteil, dass eine Anwendung für einen in der Antriebstechnik häufig genutzten Maschinentyp ermöglicht wird.

Eine elektrische Maschine weist folgende Merkmale auf:
einen Stator; und
eine Ausführungsform eines hierin genannten Rotors, wobei der Rotor relativ zu dem Stator drehbar ist.

Die elektrische Maschine kann als Innenläufer oder Außenläufer ausgeführt sein. In Verbindung mit der elektrischen Maschine kann eine Ausführungsform des hierin genannten Rotors vorteilhaft eingesetzt oder verwendet werden, um den magnetischen Fluss von den Permanentmagneten zu dem Stator zu lenken.

Ein Verfahren zum Betreiben einer Ausführungsform einer hierin genannten elektrischen Maschine weist folgenden Schritt auf:
Einprägen eines elektrischen Stroms in zumindest eine elektrische Spule des Stators, um eine Drehbewegung des Rotors relativ zu dem Stator zu bewirken.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Magnetfelds einer elektrischen Maschine anhand einer Schnittdarstellung der elektrischen Maschine;
Fig. 2 eine schematische Darstellung eines Ausführungsbeispiels einer elektrischen Maschine;
Fig. 3 eine schematische Darstellung eines Magnetfelds eines Ausführungsbeispiels einer elektrischen Maschine anhand einer Schnittdarstellung der elektrischen Maschine;
Fig. 4 ein schematisches Drehmoment-Winkelposition-Diagramm für ein Ausführungsbeispiel einer elektrischen Maschine; und
Fig. 5 ein Ablaufdiagramm eines Ausführungsbeispiels eines Verfahrens zum Betreiben einer elektrischen Maschine.

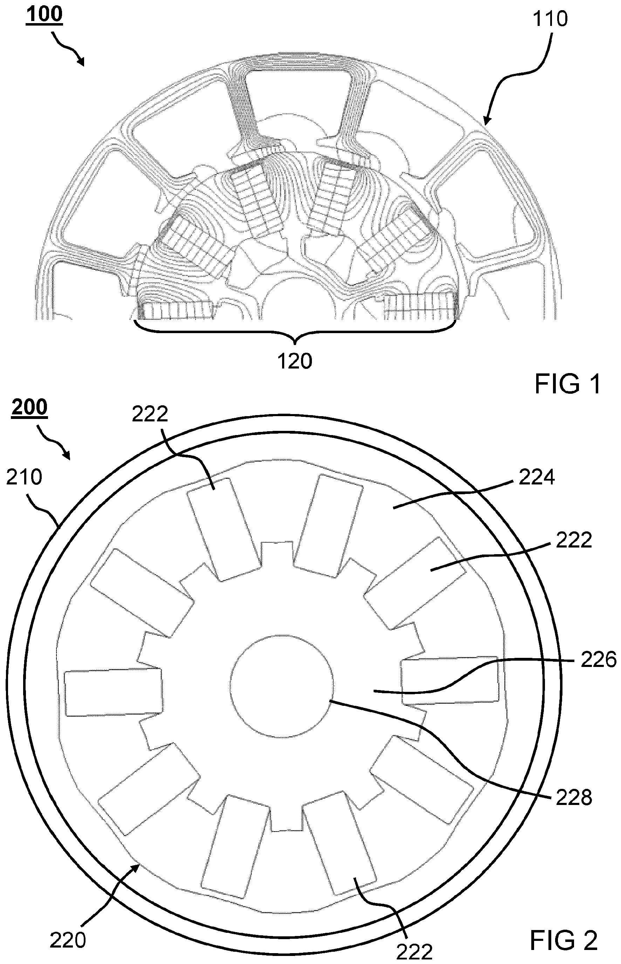

**Fig.** 1 zeigt eine schematische Darstellung eines Magnetfelds einer elektrischen Maschine 100 anhand einer Schnittdarstellung der elektrischen Maschine 100. Die elektrische Maschine 100 umfasst einen Stator 110 und einen Rotor 120. In der Darstellung von Fig. 1 ist lediglich ein Teilabschnitt der elektrischen Maschine 100 gezeigt.

**Fig.** 2 zeigt eine schematische Darstellung eines Ausführungsbeispiels einer elektrischen Maschine 200. Dabei ist die elektrische Maschine 200 insbesondere in einer schematischen Querschnittdarstellung gezeigt. Die elektrische Maschine 200 umfasst einen Stator 210 und einen Rotor 220. Der Rotor 220 ist relativ zu dem Stator 210 drehbar, genauer gesagt drehbar angeordnet bzw. gelagert. Der Rotor 220 umfasst eine Mehrzahl von Permanentmagneten 222, einen ersten Rotorabschnitt 224 und einen zweiten Rotorabschnitt 226. Ferner ist von dem Rotor 220 eine Rotorwelle 228 gezeigt. Zwischen dem Stator 210 und dem Rotor 220 ist ein Spalt oder Luftspalt angeordnet.

Der Rotor 220 ist in den ersten Rotorabschnitt 224 und den zweiten Rotorabschnitt 226 unterteilt. Der erste Rotorabschnitt 224 ist aus einem ersten Material mit einer ersten magnetischen Permeabilität ausgeformt. Dabei weist der erste Rotorabschnitt 224 mindestens einen dem Stator 210 zugewandten Teilabschnitt des Rotors 220 auf. Die Permanentmagnete 222 sind zumindest teilweise in dem ersten Rotorabschnitt 224 angeordnet bzw. eingebettet. Der zweite Rotorabschnitt 226 ist aus einem zweiten Material mit einer zweiten magnetischen Permeabilität ausgeformt, die geringer als die erste magnetische Permeabilität des ersten Materials des ersten Rotorabschnitts 224 ist. Dabei weist der zweite Rotorabschnitt 226 einen von dem Stator 210 abgewandten Teilabschnitt des Rotors 220 auf.

Gemäß dem in Fig. 2 dargestellten Ausführungsbeispiel ist die elektrische Maschine 200 als ein Innenläufer-Elektromotor ausgeführt. Hierbei ist der Rotor 220 ausgebildet, um von dem Stator 210 zumindest teilweise umgeben drehbar zu sein. Der erste Rotorabschnitt 224 weist einen radial außenliegenden Teilabschnitt des Rotors 220 auf, wobei der zweite Rotorabschnitt 226 einen radial innenliegenden Teilabschnitt des Rotors 220 aufweist. Ferner sind gemäß dem in Fig. 2 dargestellten Ausführungsbeispiel die Permanentmagnete 222 in einer Speichenkonfiguration angeordnet. Hierbei sind Längserstreckungsachsen der Permanentmagnete 222 bezogen auf den Rotor 220 radial ausgerichtet. Insbesondere erstreckt sich der erste Rotorabschnitt 224 zwischen die Permanentmagnete 222. Der zweite Rotorabschnitt 226 ist beispielsweise aus einem diamagnetischen und/oder paramagnetischen Material, insbesondere aus Aluminium ausgeformt. Der erste Rotorabschnitt 224 ist insbesondere aus Stahl und/oder aus Eisen ausgeformt.

Anders ausgedrückt zeigt Fig. 2 somit einen schematischen Querschnitt einer elektrischen Maschine mit einem Rotor 220 mit Permanentmagneten 222 in einer Speichenausrichtung. Der erste Rotorabschnitt 224 umfasst beispielsweise Eisenlamellen und der zweite Rotorabschnitt 226 umfasst als diamagnetisches und/oder paramagnetisches Material mit niedriger magnetischer Permeabilität beispielsweise Aluminium.

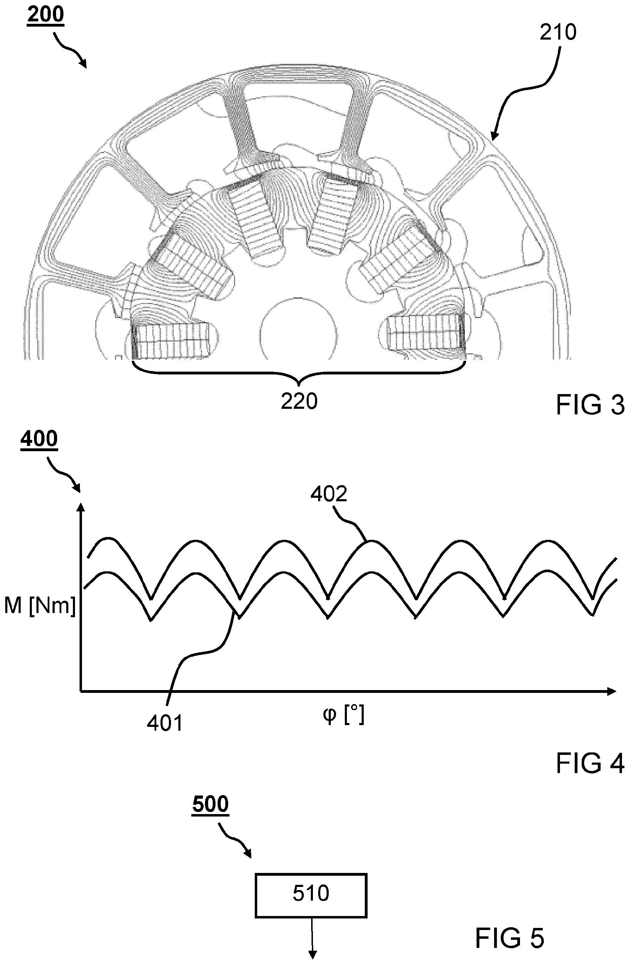

**Fig.** 3 zeigt eine schematische Darstellung eines Magnetfelds eines Ausführungsbeispiels einer elektrischen Maschine 200 anhand einer Schnittdarstellung der elektrischen Maschine 200. Dabei ist in der Darstellung von Fig. 3 Teilabschnitt der elektrischen Maschine 200 gezeigt. Die elektrische Maschine entspricht oder ähnelt hierbei der elektrischen Maschine aus einer der vorstehend beschriebenen Figuren, genauer gesagt einer der Figuren 2 bis 3. In der Darstellung von Fig. 3 sind von der elektrischen Maschine 200 lediglich der Stator 210 und der Rotor 220 explizit bezeichnet.

Anders ausgedrückt veranschaulicht Fig. 3 ein Magnetfeld eines Entwurfs einer elektrischen Maschine 200 bzw. eines Elektromotors gemäß einem Ausführungsbeispiel. Auch hier ist der Elektromotor als ein Innenläufer ausgeführt. Der radial innere Teil des Rotors 220 ist beispielsweise mit Aluminium aufgebaut. Insbesondere verglichen mit Fig. 1 ist zu erkennen, dass eine reduzierte bzw. minimierte Anzahl von Magnetfeldlinien in die radial inneren Bereiche eintreten und eine erhöhte bzw. maximierte Menge an magnetischen Fluss in den Luftspalt und in den Stator 210 geht.

**Fig. 4** zeigt ein schematisches Drehmoment-Winkelposition-Diagramm 400 für ein Ausführungsbeispiel einer elektrischen Maschine. Die elektrische Maschine entspricht oder ähnelt hierbei der elektrischen Maschine aus einer der vorstehend beschriebenen Figuren, genauer gesagt einer der Figuren 2 bis 3. An der Abszissenachse ist eine Winkelposition bzw. ein Drehwinkel ϕ des Rotors der elektrischen Maschine in Grad [°] aufgetragen und an der Ordinationsachse ist ein Drehmoment M der elektrischen Maschine in Newtonmeter [Nm] aufgetragen. Bei dem Drehmoment M handelt es sich beispielsweise um das mittlere Ausgangsdrehmoment einer als Elektromotor ausgeführten elektrischen Maschine. In dem Diagramm 400 sind ein erster Graph 401 als ein Vergleichsgraph für eine herkömmliche elektrische Maschine und ein zweiter Graph 402 für das Ausführungsbeispiel der elektrischen Maschine eingezeichnet.

Genauer gesagt zeigt Fig. 4 einen Vergleich von Drehmomenten M einer herkömmlichen elektrischen Maschine, wie beispielsweise jener aus Fig. 1, und einer elektrischen Maschine gemäß einem Ausführungsbeispiel, wie beispielsweise jener aus Fig. 2 und/oder Fig. 3. Es ist erkennbar, dass das Drehmoment M bzw. mittlere Ausgangsdrehmoment des Ausführungsbeispiels der elektrischen Maschine höher ist als ein durch eine herkömmliche elektrische Maschine erzeugtes Drehmoment. Somit ist der erste Graph 401 zwischen dem zweiten Graph 402 und der Abszissenachse angeordnet. Das mittlere Ausgangsdrehmoment des Ausführungsbeispiels der elektrischen Maschine kann beispielsweise etwa 7,5 % höher sein als ein durch eine herkömmliche elektrische Maschine erzeugtes Drehmoment.

**Fig. 5** zeigt ein Ablaufdiagramm eines Ausführungsbeispiels eines Verfahrens 500 zum Betreiben einer elektrischen Maschine. Die elektrische Maschine entspricht oder ähnelt hierbei der elektrischen Maschine aus einer der vorstehend beschriebenen Figuren, genauer gesagt einer der Figuren 2 bis 3. Somit umfasst die elektrische Maschine einen Stator und einen Rotor, wobei der Rotor relativ zu dem Stator drehbar ist. Der Rotor ist hierbei entsprechend einem hierin genannten Ausführungsbeispiel aufgebaut. Das Verfahren 500 zum Betreiben umfasst einen Schritt 510 des Einprägens eines elektrischen Stroms in zumindest eine elektrische Spule des Stators, um eine Drehbewegung des Rotors relativ zu dem Stator zu bewirken. Die elektrische Maschine ist hierbei mit fachüblichen Ansteuerungsmethoden für Elektromotoren betreibbar.

### BEZUGSZEICHENLISTE

- 100: elektrische Maschine
- 110: Stator
- 120: Rotor
- 200: elektrische Maschine
- 210: Stator
- 220: Rotor
- 222: Permanentmagnet
- 224: erster Rotorabschnitt
- 226: zweiter Rotorabschnitt
- 228: Rotorwelle
- 400: Drehmoment-Winkelposition-Diagramm
- 401: erster Graph
- 402: zweiter Graph
- M: Drehmoment
- ϕ: Winkelposition bzw. Drehwinkel
- 500: Verfahren zum Betreiben einer elektrischen Maschine
- 510: Schritt des Einprägens

## Patentansprüche

1. Rotor (220) für eine elektrische Maschine (200), wobei die elektrische Maschine (200) einen Stator (210) und den relativ zu dem Stator (210) drehbaren Rotor (220) aufweist, wobei der Rotor (220) folgende Merkmale aufweist:
eine Mehrzahl von Permanentmagneten (222);
einen ersten Rotorabschnitt (224), der aus einem ersten Material mit einer ersten magnetischen Permeabilität ausgeformt ist, wobei der erste Rotorabschnitt (224) mindestens einen in betriebsbereitem Zustand der elektrischen Maschine (200) dem Stator (210) zugewandten Teilabschnitt des Rotors (220) aufweist, wobei die Permanentmagnete (222) zumindest teilweise in dem ersten Rotorabschnitt (224) angeordnet sind; und
einen zweiten Rotorabschnitt (226), der aus einem zweiten Material mit einer zweiten magnetischen Permeabilität ausgeformt ist, die geringer als die erste magnetische Permeabilität ist, wobei der zweite Rotorabschnitt (226) einen in betriebsbereitem Zustand der elektrischen Maschine (200) von dem Stator (210) abgewandten Teilabschnitt des Rotors (220) aufweist.

2. Rotor (220) gemäß Anspruch 1, wobei der zweite Rotorabschnitt (226) aus einem diamagnetischen und/oder paramagnetischen Material, insbesondere aus Aluminium ausgeformt ist.

3. Rotor (220) gemäß einem der vorangegangenen Ansprüche, wobei der erste Rotorabschnitt (224) aus Stahl und/oder Eisen ausgeformt ist.

4. Rotor (220) gemäß einem der vorangegangenen Ansprüche, wobei sich der erste Rotorabschnitt (224) zwischen die Permanentmagnete (222) erstreckt.

5. Rotor (220) gemäß einem der vorangegangenen Ansprüche, wobei die Permanentmagnete (222) in einer Speichenkonfiguration angeordnet sind, wobei Längserstreckungsachsen der Permanentmagnete (222) bezogen auf den Rotor (220) radial ausgerichtet sind.

6. Rotor (220) gemäß einem der vorangegangenen Ansprüche, wobei der Rotor (220) ausgebildet ist, um von dem Stator (210) zumindest teilweise umgeben drehbar zu sein, wobei der erste Rotorabschnitt (224) einen radial außenliegenden Teilabschnitt des Rotors (220) aufweist, wobei der zweite Rotorabschnitt (226) einen radial innenliegenden Teilabschnitt des Rotors (220) aufweist.

7. Elektrische Maschine (200), wobei die elektrische Maschine (200) folgende Merkmale aufweist:
einen Stator (210); und
einen Rotor (220) gemäß einem der vorangegangenen Ansprüche, wobei der Rotor (220) relativ zu dem Stator (210) drehbar ist.

8. Verfahren (500) zum Betreiben einer elektrischen Maschine (200) gemäß Anspruch 7, wobei das Verfahren (500) folgenden Schritt aufweist:
Einprägen (510) eines elektrischen Stroms in zumindest eine elektrische Spule des Stators (210), um eine Drehbewegung des Rotors (220) relativ zu dem Stator (210) zu bewirken.
